(19) Europäisches Patentamt
European Patent Office
Office européen des brevets

(11) **EP 4 530 674 A2**

(12) **EUROPÄISCHE PATENTANMELDUNG**

(43) Veröffentlichungstag:
**02.04.2025 Patentblatt 2025/14**

(21) Anmeldenummer: **25157553.6**

(22) Anmeldetag: **11.10.2018**

(51) Internationale Patentklassifikation (IPC):
*G01S 13/931* (2020.01)

(52) Gemeinsame Patentklassifikation (CPC):
**G01S 13/589; G01S 13/003; G01S 13/34;
G01S 13/42; G01S 13/584; G01S 13/878;
G01S 13/931;** G01S 7/356; G01S 2013/93271

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **11.10.2017 DE 102017123636
12.01.2018 DE 102018100632**

(62) Dokumentnummer(n) der früheren Anmeldung(en)
nach Art. 76 EPÜ:
**18199876.6 / 3 470 874**

(71) Anmelder: **Symeo GmbH
85579 Neubiberg (DE)**

(72) Erfinder:
• **DOBREV, Yassen
90409 Nürnberg (DE)**
• **GULDEN, Peter
85435 Erding (DE)**

• **CHRISTMANN, Mark
81825 München (DE)**
• **VOSSIEK, Martin
90766 Fürth (DE)**
• **GOTTINGER, Michael
91054 Buckendorf (DE)**

(74) Vertreter: **Pfrang, Tilman
Meissner Bolte
Patentanwälte Rechtsanwälte
Partnerschaft mbB
Postfach 86 06 24
81633 München (DE)**

Bemerkungen:
Diese Anmeldung ist am 13.02.025 als
Teilanmeldung zu der unter INID-Code 62 erwähnten
Anmeldung eingereicht worden.

(54) **RADAR-VERFAHREN UND -SYSTEM ZUR BESTIMMUNG DER WINKELLAGE, DES ORTES UND/ODER DER, INSBESONDERE VEKTORIELLEN, GESCHWINDIGKEIT EINES ZIELES**

(57)    Die Erfindung betrifft ein Radar-Verfahren zur Bestimmung der Winkellage, des Ortes und/oder der, insbesondere vektoriellen, Geschwindigkeit eines Zieles, wobei eine erste Sende-Empfangseinheit und mindestens eine zweite, insbesondere von der ersten Sende-Empfangseinheit räumlich getrennte, zweite Sende-Empfangseinheit nicht synchronisiert sind, ein Messbeginn der ersten Sende-Empfangseinheit und der zweiten Sende-Empfangseinheit jedoch mit einer zeitlichen Abweichung $\Delta t_n$ drahtlos oder drahtgebunden getriggert werden, wobei Messungen der Sende-Empfangseinheiten kohärent prozessiert werden.

Fig. 1

**Beschreibung**

Die vorliegende Erfindung betrifft ein Radar-Verfahren und -System zur Bestimmung der Winkellage, des Ortes und/oder der, insbesondere vektoriellen, Geschwindigkeit eines Zieles.

Bekannte Radar-Verfahren, insbesondere zur Schätzung einer vektoriellen Geschwindigkeit (vgl. [1]-[3]), benutzen verteilte Radareinrichtungen, die einzeln und unabhängig voneinander eine Dopplergeschwindigkeit zu einem Objekt (Ziel) messen. Die Dopplergeschwindigkeit kann als die Projektion der vektoriellen Geschwindigkeit auf einen Verbindungsvektor zwischen dem Radar und dem Ziel interpretiert werden. Wenn die Positionen der Radare und des Ziels bekannt sind bzw. bestimmt werden können, dann kann aus den einzelnen Projektionen durch das Lösen eines linearen Gleichungssystems die vektorielle Geschwindigkeit bestimmt werden. Die Genauigkeit dieses Verfahrens ist allerdings stark von der geometrischen Verteilung der Stationen relativ zum Ziel abhängig ("dilution of precision").

Eine weitere Möglichkeit für eine Radar-Messung, insbesondere zur Bestimmung der vektoriellen Geschwindigkeit, besteht in der Auswertung der Phasenverlauf-Differenzen zwischen zwei Antennen (vgl. [4]-[11]). Dieses Verfahren ermöglicht höhere Genauigkeiten und ist weniger abhängig von der Problemgeometrie. Im Stand der Technik gemäß [4]-[7] wird jedoch nur der Fall behandelt, dass sich das Ziel bei 0° Azimut (Boresight) und im Array-Fernfeld befindet. Die Veröffentlichungen [8]-[11] behandeln auch den Fall Azimut $\neq 0°$, aber nicht das Array-Nahfeld. Die Verfahren des Standes der Technik gemäß [4]-[11], die auf Phasenverlauf-Differenzen beruhen, benutzen zwei Antennen, die an einer Radareinrichtung angeschlossen sind.

Da für die genaue Messung der tangentialen Geschwindigkeit vergleichsweise große Aperturen notwendig sind, ist der Fall, dass sich das Ziel nicht bei 0° Azimut und/oder im Nahfeld befindet, von großem Interesse.

[1] D. Kellner, M. Barjenbruch, K. Dietmayer, J. Klappstein, and J. Dickmann, "Instantaneous lateral velocity estimation of a vehicle using doppler radar," in Information Fusion (FUSION), 2013 16th International Conference on, 2013, pp. 877-884.

[2] H. Rohling, F. Folster, and H. Ritter, "Lateral velocity estimation for automotive radar applications," in 2007 IET Int. Conf. on Radar Systems, Edinburgh, UK, 2007, pp. 181-181.

[3] W. Montlouis and P.-R. J. Cornely, "Direction of Arrival and Angular Velocities (DOAV) Estimation using Minimum Variance Beamforming," in Radar Conference, 2007 IEEE, 2007, pp. 641-646.

[4] A. W. Doerry, "Patch diameter limitation due to high chirp rates in focused SAR images," IEEE transactions on aerospace and electronic systems, vol. 30, no. 4, pp. 1125-1129, 1994.

[5] A. Doerry, "Tangential Velocity Measurement using Interferometric MTI Radar," 2002. [Online]. Available: http://prod.sandia.gov/techlib/access-control.cgi/2002/023614.pdf. [Accessed Sep. 26, 2017]

[6] A. Doerry, B. Mileshosky, and D. Bickel, "Tangential velocity measurement using interferometric MTI radar," U.S. Patent 6 982 668 B1, Jan. 3, 2006.

[7] J. A. Nanzer, "Millimeter-Wave Interferometric Angular Velocity Detection," IEEE Transactions on Microwave Theory and Techniques, Dec. 2010.

[8] J. A. Nanzer and A. H. Zai, "Correction of frequency uncertainty in wide field of view interferometric angular velocity measurements," in Microwave Symposium Digest (MTT), 2012 IEEE MTT-S International, 2012, pp. 1-3.

[9] J. A. Nanzer, K. Kammerman, and K. S. Zilevu, "A 29.5 GHz radar interferometer for measuring the angular velocity of moving objects," in Microwave Symposium Digest (IMS), 2013 IEEE MTT-S International, 2013, pp. 1-3.

[10] J. A. Nanzer, "Resolution of interferometric angular velocity measurements," in Antennas and Propagation (APSURSI), 2011 IEEE International Symposium on, 2011, pp. 3229-3232.

[11] J. A. Nanzer, "Micro-motion signatures in radar angular velocity measurements," in Radar Conference (Radar-Conf), 2016 IEEE, 2016, pp. 1-4.

[12] T. Wagner, R. Feger, and A. Stelzer, "Wide-band range-Doppler processing for FMCW systems," in Radar Conference (EuRAD), 2013 European, 2013, pp. 160-163.

Es ist Aufgabe der Erfindung, auf möglichst einfache Art und Weise eine Winkellage, einen Ort und/oder eine, insbesondere vektorielle, Geschwindigkeit eines Zieles, mit vergleichsweise hoher Genauigkeit zu bestimmen.

Diese Aufgabe wird mit den Merkmalen des Anspruchs 1 gelöst.

Insbesondere wird die Aufgabe durch ein Radar-Verfahren zur Bestimmung der Winkellage, des Ortes und/oder der, insbesondere vektoriellen, Geschwindigkeit eines Zieles, gelöst, wobei eine erste Sende-Empfangseinheit und mindestens eine zweite (insbesondere von der ersten Sende-Empfangseinheit räumlich getrennte) zweite Sende-Empfangseinheit nicht synchronisiert sind, ein Messbeginn der ersten Sende-Empfangseinheit und der zweiten Sende-Empfangseinheit jedoch mit einer zeitlichen Abweichung (Trigger-Offset-Zeit) $\Delta t_n$ (drahtlos oder drahtgebunden) getriggert werden. Vorzugsweise werden Messungen der Messe-Empfangseinheiten kohärent prozessiert.

Die zweite Sende-Empfangseinheit soll insbesondere dann als nicht-synchronisiert gegenüber der ersten Sende-Empfangseinheit gelten, wenn eine zeitliche Abweichung (Trigger-Offset-Zeit) zwischen erster und zweite Sende-Empfangseinheit größer als 1 ps, vorzugsweise größer als 1 ns, ggf. größer 10 ns ist. Die zeitliche Abweichung $\Delta t_n$ kann jedoch gegebenenfalls $\leq$ 10 $\mu$s, vorzugsweise $\leq$ 1 $\mu$s (insbesondere bei einem dynamischen Ziel) sein. Insbesondere bei einem stationären Ziel kann die zeitliche Abweichung auch größer sein. Unter einer kohärenten Prozessierung ist insbesondere zu verstehen, dass die Messungen der Sende-Empfangseinheiten so weiterverarbeitet werden, als ob sie von einem gemeinsamen Lokaloszillator generiert wären. Ein Beispiel hierfür wären zwei Empfangsantennen eines SIMO-Radars.

Dadurch kann auf einfache Art und Weise ein Ziel erfasst werden, insbesondere eine Winkellage, ein Ort und/oder eine, vorzugsweise vektorielle, Geschwindigkeit des Zieles bestimmt werden. Insbesondere ermöglicht die vorliegende Erfindung eine einfache und genaue Schätzung (Bestimmung) der vektoriellen Geschwindigkeit auch bei einem Azimut $\neq$ 0° und/oder im Nahfeld. Des Weiteren ist die Verwendung grobsynchronisierter verteilter Radarstationen zur Erzeugung großer Aperturen möglich.

Unter einer zeitlichen Abweichung (Trigger-Öffset-Zeit) $\Delta t_n$ ist insbesondere eine Abweichung zu verstehen, die sich verfahrens- bzw. systembedingt, insbesondere aufgrund von verwendeten drahtlosen und/oder drahtgebundenen Übertragungen, ergibt. Die zeitliche Abweichung $\Delta t_n$ ist also insbesondere verfahrens- bzw. systeminhärent. Vorzugsweise werden die Messungen (bzw. Sendesignale) der Sende-Empfangseinheiten nicht von einem gemeinsamen Lokaloszillator generiert.

Mindestens zwei Messsignale (die von einem gemeinsamen Ziel reflektiert wurden) werden vorzugsweise miteinander interferiert, insbesondere durch komplexkonjugierte Multiplikation, insbesondere im Zeitbereich (= nicht-ausschließliche Alternative a)). Dabei ist anzumerken, dass die komplex konjugierte Multiplikation einer Division durch einen komplexen Zeiger mit normalisierter Amplitude entsprechen kann.

Alternativ oder zusätzlich können komprimierte, insbesondere Range-Doppler-komprimierte, Signale miteinander interferiert werden, vorzugsweise durch Faltung, insbesondere im Frequenzbereich (= nicht-ausschließliche Alternative b)).

Eine Holographie-Prozessierung erfolgt vorzugsweise in xy-Richtung. Eine Interferenz erfolgt vorzugsweise entlang einer Doppler-Richtung z. B. durch Multiplikation im Zeitbereich (Alternative a)) oder durch Faltung im Frequenzbereich (Alternative b)). Die Holographie kann sowohl in a) als auch in b) vorgesehen sein, als Grundlage für die Interferenz.

Insbesondere können (alternativ oder zusätzlich) mindestens zwei Signale, zuerst räumlich, beispielsweise in einem kartesischen x,y- Koordinatensystem, holographisch interferiert werden, sowie dann in der Doppler-Ebene (Geschwindigkeitsebene) durch Multiplikation im Zeitbereich (Alternative a), insbesondere durch konjugiert komplexe Multiplikation, oder durch Faltung im Frequenzbereich (Alternative b).

Vorzugsweise wird aus einem resultierenden Signal eine vektorielle Geschwindigkeit des Ziels bestimmt.

Grundsätzlich ist das Verfahren besonders bevorzugt derart konfiguriert, dass eine (2D- oder 3D-) Vektorgeschwindigkeit des Ziels bestimmt werden kann.

In einer vorteilhaften Ausführungsform bestimmt die jeweilige (erste und/oder zweite) Sende-Empfangseinheit ihre eigene(n) (vektoriellen) Geschwindigkeiten, basierend auf eine bekannten bzw. bestimmten (vektoriellen) Geschwindigkeit eines oder mehrerer (beispielsweise statischen/statischer) Ziele(s) (*ego-motion estimation*).

In einer ersten Alternative kann sich das Ziel im Nahfeld befinden. Alternativ kann sich das Ziel auch im Fernfeld befinden. Unter Nahfeld ist vorzugsweise eine Entfernung des Ziels zu verstehen, die kleiner oder gleich dem 10-fachen eines Abstandes zwischen den beiden Sende-Empfangseinheiten (bzw. bei mehreren Sende-Empfangseinheiten eines Abstandes zwischen den zwei Sende-Empfangseinheiten, die am weitesten voneinander entfernt sind) ist, bzw. kleiner oder gleich dem 10-fachen einer Aperturgröße eines Systems aus Sende-Empfangseinheiten ist. Unter einem Fernfeld ist dann insbesondere eine Entfernung zum Ziel zu verstehen, die über den gerade genannten relativen Werten liegt. Besonders bevorzugt befindet sich das Ziel im Nahfeld. Gerade im Nahfeld können (im Unterschied zum Stand der Technik) präzise Messungen auf einfache Art und Weise erzielt werden.

In einer konkreten Ausführungsform bilden die Sende-Empfangseinheiten eine verteilte Apertur. Ein Abstand zwischen mehreren Sende-Empfangseinheiten kann mindestens 20 cm, weiter vorzugsweise mindestens 50 cm, weiter vorzugsweise mindesten 100 cm betragen (bei mehreren Sende-Empfangseinheiten kann dies entweder für einen Abstand zu der jeweils nächsten Sende-Empfangseinheit gelten oder alternativ für den Abstand zwischen den beiden Sende-Empfangseinheiten, die zueinander den größten Abstand, unter allen Paaren von möglichen Sende-Empfangseinheiten, gelten).

Eine Ortung des Ziels erfolgt vorzugsweise nach einem Holographie-Prinzip.

In konkreten Ausführungsformen ist das Verfahren ein FMCW-Radarverfahren (wobei FMCW für frequency modulated continuous wave steht).

Vorzugsweise arbeitet das Verfahren nach dem Range-Doppler-Prinzip.

In konkreten Ausführungsformen sind die mindestens zwei Sende-Empfangseinheiten monostatisch. Ein Abstand zwischen den Sende-Empfangseinheiten ist vorzugsweise mindestens 5-mal, weiter vorzugsweise mindestens 10-mal so groß wie ein jeweiliger Abstand zwischen Sende- und Empfangsantennen ein und derselben Sende-Empfangseinheit (im Folgenden auch als Rx-Antenne=Empfangsantenne bzw. Tx-Antenne=Sendeantenne bezeichnet).

Insbesondere nach einer holografischen Interferenz erfolgt eine Fourier-Transformation entlang einer langsamen Zeit (slow time). Die "langsame Zeit" ist weiter unten in näherem Detail definiert. Es kann eine Peak-Suche zur Bestimmung einer Ellipsen-/Hyperbel-Geschwindigkeit, insbesondere in mehreren oder allen Pixeln (des Ziels), durchgeführt werden. Weiterhin kann eine Bestimmung von Ellipsen-/Hyperbel-Parametern, insbesondere in mehreren oder allen Pixeln (des Ziels) durchgeführt werden. Alternativ oder zusätzlich kann eine Transformation einer Ellipsen-/Hyperbel-Geschwindigkeit in eine (kartesische) vektorielle Geschwindigkeit durchgeführt werden.

Eine Signalfrequenz kann vor einer Interferenzbildung halbiert werden.

Eine Doppler-Geschwindigkeit kann bestimmt werden, insbesondere zur zumindest teilweisen Kompensation einer Doppler-Shift.

Es kann ein Optimalfilteransatz zum Einsatz kommen, insbesondere zur zumindest teilweisen Kompensation einer Doppler-Shift und/oder bei einer vergleichsweise hohen Bandbreite des Radars und/oder einer vergleichsweise hohen Geschwindigkeit des Ziels.

Es kann eine Range-Doppler-Kompression mittels einer fraktionalen Fourier-Transformation (FRFT) durchgeführt werden, insbesondere bei einer vergleichsweise hohen Bandbreite des Radars und/oder einer vergleichsweise hohen Geschwindigkeit des Ziels.

Es kann eines oder mehrere von ggf. (Range-Doppler-)komprimierten Signalen zusätzlich in Azimut-Richtung, vorzugsweise mittels Fourier-Transformation und/oder digitaler Beamforming-Algorithmen komprimiert werden, insbesondere zur Nebenkeulenunterdrückung.

In Ausführungsformen werden Verfahren vorgeschlagen, wobei mindestens drei Sende-Empfangseinheiten zum Einsatz kommen, wobei vorzugsweise eine 3D-Geschwindigkeitsbestimmung durchgeführt wird, insbesondere durch Bildung eines Schnittes von zwei Paaren, die jeweils aus einem Ellipsoid und einem Hyperboloid bestehen. Alternativ oder zusätzlich kann ein Optimalfilteransatz zum Einsatz kommen, wobei eine Hypothese (Hypothesen) für mehrere bzw. alle $[x\ y,\ z,\ v_x,\ v_y,\ v_z]$-Kombinationen in einem Suchbereich gebildet wird/werden und mit Messdaten verglichen werden.

Gemäß Ausführungsformen werden Verfahren vorgeschlagen, wobei

- in der ersten Sende-Empfangseinheit ein erstes Signal erzeugt und über einen Pfad gesendet, insbesondere ausgestrahlt wird,

- in der zweiten Sende-Empfangseinheit ein weiteres erstes Signal erzeugt und über den Pfad gesendet, insbesondere ausgestrahlt wird,

- ein erstes Vergleichssignal aus dem erstem Signal der ersten Sende-Empfangseinheit und aus einem solchen von der zweiten Sende-Empfangseinheit, über den Pfad empfangenen, ersten Signal gebildet wird und

- ein weiteres Vergleichssignal aus dem erstem Signal der zweiten Sende-Empfangseinheit und aus einem solchen von der ersten Sende-Empfangseinheit, über den Pfad empfangenen, ersten Signal gebildet wird,

- wobei das weitere Vergleichssignal vorzugsweise von der zweiten Sende-Empfangseinheit zu der ersten Sende-Empfangseinheit übertragen, insbesondere kommuniziert wird und/oder

wobei vorzugsweise ein Vergleichs-Vergleichssignal aus dem ersten Vergleichssignal und dem weiteren Vergleichssignal gebildet wird und/oder wobei in einem ersten Schritt Abweichungen der Vergleichssignale, die durch systematische Abweichungen in den Sende-Empfangseinheiten hervorgerufen werden, kompensiert werden und in einem zweiten Schritt zumindest ein komplexer Wert aus einem ersten der beiden Vergleichssignale oder aus einem Signal, das aus diesem ersten Vergleichssignal abgeleitet wurde, dazu verwendet wird, zumindest einen komplexen Wert des zweiten der beiden Vergleichssignale oder einen Wert eines Signals, das aus diesem zweiten Vergleichssignal abgeleitet wurde, anzupassen und so ein angepasstes Signal zu bilden, wobei die Anpassung derart geschieht, dass durch eine mathematische Operation die vektorielle Summe oder die Differenz der komplexen Werte gebildet wird oder die Summe oder die Differenz der Phasen der komplexen Werte gebildet wird. Weiterbildungen dieser Verfahren (nachfolgend auch als Verfahren I und Verfahren II bezeichnet) können aus DE 10 2014 104 273 A1 und/oder WO 2017/118621 A1 entnommen werden. Hiermit soll die diesbezügliche Offenbarung der DE 10 2014 104 273 A1 und/oder WO 2017/118621 A1 explizit durch Verweis Bestandteil der vorliegenden Erfindung sein. In DE 10 2014 104 273 A1 ist auch ein entsprechendes Radar-System beschrieben. Das Verfahren gemäß DE 10 2014 104 273 A1 soll im Folgenden als "Verfahren I" bezeichnet werden. Die Konfiguration des Radar-Systems gemäß DE 10 2014 104 273 A1 soll als "Konfiguration I" bezeichnet werden. Ein weiteres Verfahren sowie eine weitere Konfiguration für ein Radar-System zur Erhöhung der Kohärenz ist aus der WO 2017/118621 A1 entnehmbar. Das in diesen beiden Anmeldungen beschriebene Verfahren bzw. Radar-System soll im Folgenden als "Verfahren II" sowie "Konfiguration II" bezeichnet werden. Das vorliegende Verfahren wird vorzugsweise auf einen direkten Pfad und einen Kreuzpfad gemäß dem Verfahren I und/oder II angewendet.

Die obengenannte Aufgabe wird weiterhin gelöst durch ein Radar-System zur Bestimmung der Winkellage, des Ortes und/oder der, insbesondere vektoriellen, Geschwindigkeit eines Zieles, insbesondere zur Durchführung des obigen Verfahrens, wobei eine erste Sende-Empfangseinheit und mindestens eine zweite Sende-Empfangseinheit vorgesehen sind, die nicht miteinander synchronisiert sind, wobei eine Steuereinrichtung vorgesehen ist, die konfiguriert ist, einen Messbeginn der ersten Sende-Empfangseinheit und der zweiten Sende-Empfangseinheit mit einer zeitlichen Abweichung (Trigger-Offset-Time) $\Delta t_n$ drahtlos oder drahtgebunden zu triggern, wobei eine Rechen- und/oder Auswerteeinrichtung vorgesehen ist, die derart konfiguriert ist, dass Messungen der Sende-Empfangseinheiten kohärent prozessiert werden.

Soweit (z. B. in der (jeweiligen) Sende-Empfangseinheit) Berechnungen, Auswertungen oder sonstige Verfahrensschritte durchgeführt werden, fällt darunter auch eine ggf. körperlich eigenständige Auswerteeinrichtung, die an eine oder mehrere Sende-Empfangseinheiten angeschlossen ist. Auch eine Steuereinrichtung, z.B. zum Triggern eines Messbeginns, kann als körperlich eigenständige Steuereinrichtung (ggf. in einer gemeinsamen Baugruppe, insbesondre Gehäuse, mit der Auswerteeinrichtung) ausgebildet sein, die an eine oder mehrere Sende-Empfangseinheiten angeschlossen ist. Beispielsweise kann die jeweilige Sende-Empfangseinheit als eine Anordnung aus insbesondere einer oder mehreren Antennen mit einigen (wenigen) signalerzeugenden oder signalverarbeitenden Komponenten ausgebildet sein, während weitere Komponenten, wie Signalvergleichseinheiten oder eine Steuer- und/oder Auswerteeinrichtung als konstruktiv eigenständige Komponente an eine solche Anordnung angeschlossen sein können. Soweit Komponenten eingesetzt werden, können diese (soweit technisch realisierbar) als sogenannte Hardware aus verarbeitenden Komponenten ausgebildet sein und/oder als ganz oder teilweise in einem Prozessor ausgeführtes Signal bzw. Datenverarbeitungsschritte umgesetzt werden.

Im Allgemeinen kann die Steuer- und/oder Auswerteeinrichtung Bestandteil einer oder mehrerer Sende-Empfangseinheiten sein, oder an einer oder mehrerer solcher Sende-Empfangseinheit(en) angeschlossen sein. Gegebenenfalls kann eine körperlich eigenständige Steuer- und/oder Auswerteeinrichtung vorgesehen sein, die an die jeweilige Sende-Empfangseinheit bzw. die übrigen Komponenten der jeweiligen Sende-Empfangseinheit angeschlossen ist. Alternativ kann die Steuer- und/oder Auswerteeinrichtung ggf. in die erste und/oder die zweite (allgemein weitere) Sende-Empfangseinrichtung, beispielsweise in einem gemeinsamen Gehäuse und/oder als Baueinheit, integriert sein.

Jedes Sende-Empfangseinheit kann eine oder mehr Sende- bzw. Empfangs- Antennen haben.

Die obengenannte Aufgabe wird weiterhin gelöst durch die Verwendung des Verfahrens der obigen Art und/oder des Systems der obigen Art, für eine mobile Einrichtung, vorzugsweise ein Fahrzeug, insbesondere Personen- und/oder Lastkraftwagen.

Die obengenannte Aufgabe wird weiterhin gelöst durch eine mobile Einrichtung, insbesondere Fahrzeug, vorzugsweise Personen- und/oder Lastkraftwagen, umfassend das obige System.

In der nachfolgenden Beschreibung, werden auch unter Bezugnahme auf die beiliegenden Figuren, weitere Grundlagen, Aspekte und Ausführungsformen der Erfindung beschrieben. Hierbei zeigen:

Fig. 1     zwei Empfangseinheiten in einem Abstand zueinander;

Fig. 2     zwei Empfangseinheiten in einer von Fig. 1 abweichenden Konfiguration;

Fig. 3     Darstellung der Bewegung eines Ziels im Nahfeld;

Fig. 4     resultierende 3D-Spektren zur Schätzung einer Geschwindigkeit;

Fig. 5     eine Messsituation mit zwei Personenkraftwagen;

Fig. 6     eine Messsituation mit vier Personenkraftwagen sowie einem Fußgänger.

In der nachfolgenden Beschreibung werden für gleiche und gleichwirkende Teile dieselben Bezugsziffern verwendet.

**Kohärente Prozessierung verteilter Radar-Stationen zur Ortung:**

Die Phase des Sendesignals $\varphi_{Tx}$ bzw. Empfangssignals $\varphi_{Rx}$ eines FMCW-Radars, das nach dem Range-Doppler-Prinzip arbeitet, lässt sich im Allgemeinen beschreiben als

$$\varphi_{\mathrm{Tx}}(t_{\mathrm{f}}, t_i) = 2\pi \left( f_0 t_{\mathrm{f}} + \frac{\mu t_{\mathrm{f}}^2}{2} \right) + \varphi_0. \qquad (1)$$

und

$$\varphi_{\mathrm{Rx}}(t_{\mathrm{f}}, t_i) = 2\pi \left( f_0 (t_{\mathrm{f}} - \tau) + \frac{\mu (t_{\mathrm{f}} - \tau)^2}{2} \right) + \varphi_0 + \varphi_{\mathrm{t}}. \qquad (2)$$

Mit:

- $t_{\mathrm{f}} = 0 \dots T = t - t_i$: "schnelle Zeit" bzw. "fast time"; $T$ ist eine Sweepdauer, $t$ ist die absolute Zeit.
- $t_i = iT$: "langsame Zeit" bzw. "slow time", $i = 0 \dots M$ ist eine Sweepnummer, $M$ ist die Anzahl an Rampen in einem Burst.
- $\tau = \frac{d_{\mathrm{rt}}(t_{\mathrm{f}}, t_i)}{c}$: "Time of flight" von der Tx Antenne zum Ziel und zurück zur Rx Antenne; $d_{\mathrm{rt}}(t_{\mathrm{f}}, t_i)$ ist der dazugehörige Abstand (siehe (4)).
- $f_0$: Trägerfrequenz; $\mu = \frac{B}{T}$: Sweep-Steigung; $B$: Bandbreite; $c$: Ausbreitungsgeschwindigkeit.
- $\varphi_0$: Unbekannte Anfangsphase des Sweeps.
- $\varphi_{\mathrm{t}}$: Reflexionsphase des Ziels.

Die Phase des (Basisband-)Signals, das sich durch Mischung des Rx-Signals (empfangenes Signal) mit dem Tx-Signal (gesendetes Signal) ergibt, ist dann

$$\varphi(t_{\mathrm{f}}, t_i) = \varphi_{\mathrm{Tx}}(t_{\mathrm{f}}, t_i) - \varphi_{\mathrm{Rx}}(t_{\mathrm{f}}, t_i) \overset{d_{\mathrm{rt}}^2(t_{\mathrm{f}}, t_i) \ll d_{\mathrm{rt}}(t_{\mathrm{f}}, t_i)t}{\approx} \frac{2\pi}{c}(f_0 + \mu t_{\mathrm{f}}) d_{\mathrm{rt}}(t_{\mathrm{f}}, t_i) + \varphi_{\mathrm{t}}, \qquad (3)$$

mit dem Round-Trip-Abstand

$$d_{\mathrm{rt}}(t_{\mathrm{f}}, t_i) \overset{d \gg |v_r| MT}{\approx} d_{\mathrm{rt,0}} + 2 v_r (t_{\mathrm{f}} + t_i). \qquad (4)$$

Dabei bezeichnet $d_{\mathrm{rt,0}}$ den Round-Trip-Abstand zum Ziel am Anfang eines Bursts und $v_r$ die radiale Geschwindigkeit des Ziels relativ zum Radar. Einsetzen von (4) in (3) mit Vernachlässigung von Termen, die $t_{\mathrm{f}}^2$, $t_i^2$ und $t_{\mathrm{f}} t_i$ enthalten, führt zu

$$\varphi(t_{\mathrm{f}}, t_i) \approx \frac{2\pi}{c} \left( f_0 d_{\mathrm{rt,0}} + (\mu d_{\mathrm{rt,0}} + 2 f_o v_r) t_{\mathrm{f}} + 2 f_0 v_r t_i \right) + \varphi_{\mathrm{t}}. \qquad (5)$$

Die resultierende Signalphase in (5) ist nur noch vom Abstand zum Ziel, der relativen radialen Geschwindigkeit des Ziels und der Reflexionsphase des Ziels abhängig. Die unbekannte Anfangsphase $\varphi_0$ verschwindet beim Mischvorgang in (3).

Benutzt man N verteilte Radarstationen (Sende-Empfangeinheiten), deren Uhren nicht frequenzsynchronisiert sind, aber vom gleichen Typ sind, bei denen der Messstart über Draht oder drahtlos gleichzeitig mit einer Genauigkeit von $\Delta t_n$ getriggert wird und deren Rampen mit einem Frequenzoffset $\Delta f_n$ zueinander versetzt sind, ergibt sich folgendes Signalmodell für die Basisbandsignalphase im Radar Nummer n:

$$\varphi_n(t_{\mathrm{f}}, t_i) \approx \frac{2\pi}{c} \Big( (f_0 + \Delta f_n) d_{\mathrm{rt,0,}n} + (\mu d_{\mathrm{rt,0,}n} + 2(f_o + \Delta f_n) v_{\mathrm{r,}n})(t_{\mathrm{f}} + \Delta t_n) + 2(f_o + \Delta f_n) v_{\mathrm{r,}n}(t_i + \Delta t_n) \Big) + \varphi_{\mathrm{t}}. \qquad (6)$$

Die einzelnen Phasenterme haben folgende Bedeutung:

- $\varphi_{\phi,n} = \frac{2\pi}{c} f_0 \left(1 + \frac{\Delta f_n}{f_0}\right) d_{\mathrm{rt},0,n} + \varphi_t \overset{\Delta f_n \ll f_0}{\approx} \frac{2\pi}{c} f_0 d_{\mathrm{rt},0,n} + \varphi_t$ : Phasenoffsetterm, der vom Wegunterschied zwischen den Stationen abhängt und zur Winkelschätzung benutzt werden kann.

- $f_d = \frac{\partial \varphi_n(t_f,t_i)}{\partial t_f} \approx \frac{2\pi}{c} \mu d_{\mathrm{rt},0,n}$ : Frequenz, die zum Abstand proportional ist. Ergibt sich durch Kompression (z. B. mithilfe der FFT) in "fast time"-Richtung.

- $f_{v_r} = \frac{\partial \varphi_n(t_f,t_i)}{\partial t_i} \approx 2f_0 \left(1 + \frac{\Delta f_n}{f_0}\right) v_{\mathrm{r},n} \overset{\Delta f_n \ll f_0}{\approx} 2f_0 v_{\mathrm{r},n}$ : Frequenz, die zur radialen Geschwindigkeit proportional ist. Ergibt sich durch Kompression (z. B. mithilfe der FFT) in "slow time"-Richtung.

- $\varphi_t$: Phasenterm, der in jeder Station $n$ näherungsweise gleich ist, vorausgesetzt das Reflexionsverhalten des Ziels ist identisch in jeder von den Radaren beleuchteten Richtung.

Da die Trigger-Offset-Zeit $\Delta t_n \approx 15$ ns (ggf. 1 bis 100 ns, insbesondere 5 bis 30 ns) bei drahtgebundener und $\Delta t_n \approx 1\,\mu$s (ggf. 0,1 bis 10 $\mu$s, insbesondere 0,5 bis 2 $\mu$s) bei drahtloser Triggerung beträgt, gilt im Allgemeinen $|v|\Delta t_n \approx 0$, d.h. die Zielposition bleibt während der Zeit $\Delta t_n$ näherungsweise konstant.

$\varphi_{\phi,n}$ ist folglich nur noch vom Abstand zwischen dem jeweiligen Radar und dem Ziel abhängig und kann in allen Stationen kohärent prozessiert werden. Die Radare bilden eine verteilte Apertur.

Für das Signal $s_n$ in Station n nach einer Range-Kompression (Kompression entlang der schnellen Zeit $t_f$) gilt

$$s_n(d, t_0) = W_d\big(d - d_{\mathrm{rt},0,n}\big) \cdot \exp\left(\mathrm{j}\left(\frac{2\pi}{c} f_0 d_{\mathrm{rt},0,n} + \varphi_t\right)\right), \qquad (7)$$

wo $W_d$ die Fourier-Transformation der benutzten Fensterfunktion in Range bezeichnet. Ausgehend von diesem Signalmodell kann eine 2D-Ortung des Ziels nach dem Holografie-Prinzip mithilfe folgenden Optimalfilters durchgeführt werden:

$$h_n\big(d_{n,\mathrm{hyp}}(x_{\mathrm{hyp}}, y_{\mathrm{hyp}})\big) = \exp\left(-\mathrm{j}\frac{2\pi}{c} f_0 d_{n,\mathrm{hyp}}(x_{\mathrm{hyp}}, y_{\mathrm{hyp}})\right), \qquad (8)$$

mit der Hypothese für den Round-Trip Abstand

$$d_{n,\mathrm{hyp}}(x_{\mathrm{hyp}}, y_{\mathrm{hyp}}) = \left\|\boldsymbol{p}_{\mathrm{Tx},n} - \boldsymbol{p}_{\mathrm{t,hyp}}\right\| + \left\|\boldsymbol{p}_{\mathrm{t,hyp}} - \boldsymbol{p}_{\mathrm{Rx},n}\right\| \text{ with } \boldsymbol{p}_{\mathrm{t,hyp}} = \left[x_{\mathrm{hyp}}, y_{\mathrm{hyp}}\right]. \qquad (9)$$

$\boldsymbol{p}_{\mathrm{Tx},n}$ bzw. $\boldsymbol{p}_{\mathrm{Rx},n}$ ist die bekannte 2D Position der Tx Antenne bzw. Rx Antenne von Radar n. Jedes Radar (Sende-Empfangseinheit) kann eine oder mehr Tx bzw. Rx Antennen haben. Falls mehr als 1 Antenne vorhanden ist, muss jeweils eine Hypothese für jede Tx-Rx Kombination nach dem gleichen Prinzip erstellt werden. $\boldsymbol{p}_{\mathrm{t,hyp}}$ ist eine zu überprüfende Hypothese für die 2D Position des Ziels. Das Verfahren lässt sich direkt auf 3D anpassen, wenn die Koordinaten in (9) durch 3D Koordinaten ersetzt werden.

Die Wahrscheinlichkeit, dass sich ein Ziel an der Position $\boldsymbol{p}_{\mathrm{t,hyp}}$ befindet berechnet sich dann wie folgt:

$$I(x_{\mathrm{hyp}}, y_{\mathrm{hyp}}) = \sum_{n=1}^{N} h_n\big(d_{n,\mathrm{hyp}}(x_{\mathrm{hyp}}, y_{\mathrm{hyp}})\big) \cdot s_n(d, t_0). \qquad (10)$$

Falls sich das Ziel im Fernfeld der Apertur befindet, reduziert sich (10) zum Beamforming-Ansatz und die 2D-Suche über $x$ und $y$ kann durch eine 1D-Suche für den Abstand und eine anschließende Suche für den Winkel ersetzt werden.

Falls sich das Ziel im Nahfeld der Apertur befindet, ist vorzugsweise eine 2D-Suche entsprechend (10) durchzuführen. Da sich das Ziel in den einzelnen Radaren in verschiedenen Range-Bins befinden kann ("range migration"), ist ggf. eine Interpolation in Range-Richtung notwendig, die als komplexwertige lineare Interpolation implementiert werden kann.

Dieses Verfahren erlaubt die kohärente Prozessierung nicht-synchronisierter verteilter Radarstationen, was die Realisierung großer Aperturen ermöglicht. Dadurch ist die Lokalisierung eines Ziels mit einer hohen Genauigkeit möglich.

**Kohärente Prozessierung verteilter Radar-Stationen zur Bestimmung der vektoriellen Zielgeschwindigkeit im Fernfeld**

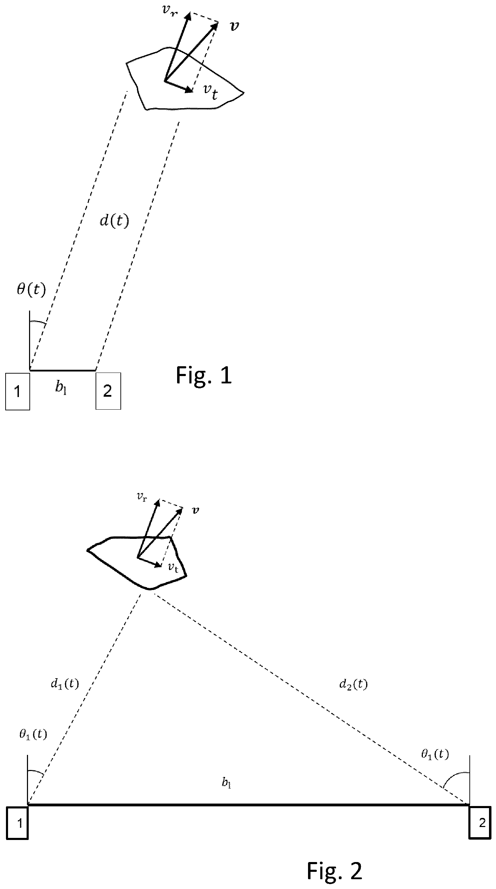

Fig. 1 zeigt zwei Sende-Empfangseinheiten 1,2 in einem Abstand von $b_l$ zueinander, die nach dem FMCW-Range-Doppler-Prinzip näherungsweise gleichzeitig zum Ziel messen, das sich mit einer vektoriellen Geschwindigkeit v bewegt.

Wenn sich ein Ziel im Fernfeld des Antennenarrays befindet, das die Sende-Empfangseinheiten 1,2 (und ggf. weitere Sende-Empfangseinheiten) umfasst, kann die Geometrie wie in Fig. 1 dargestellt werden. Das Ziel befindet sich ursprünglich bei $[d_0, \theta_0]$ im Radar-Polarkoordinatensystem und bewegt sich mit der vektoriellen Geschwindigkeit v. Die Abstandsänderung zwischen den Radaren und dem Ziel (Radialkomponente) kann beschrieben werden als

$$d(t) = d_0 + v_{\mathrm{r}}t \qquad\qquad (11)$$

mit der radialen Geschwindigkeit $v_r$. Die Winkeländerung (Tangentialkomponente) ist

$$\theta(t) = \theta_0 + \omega t = \theta_0 + \frac{v_{\mathrm{t}}}{d_o}t, \qquad\qquad (12)$$

wo $\omega$ die Winkelgeschwindigkeit und $v_t$ die tangentiale Geschwindigkeit bezeichnet. Das zugehörige Signalmodell in den Sende-Empfangseinheiten 1,2, die nach dem FMCW Range-Doppler-Prinzip arbeiten, nach einer Range-Kompression (z. B. mithilfe der Fourier-Transformation), ist

$$s_1(d, t_i) = \delta_d(d - 2d_0) \cdot \exp\left(\mathrm{j}\frac{2\pi}{\lambda}(2d_0 + 2v_r t_i)\right),$$

$$s_2(d, t_i) = W_d(d - 2d_0) \cdot \exp\left(\mathrm{j}\frac{2\pi}{\lambda}(2d_0 + 2v_r t_i + 2b_l \sin(\theta_0 + \omega_a t_i))\right), \qquad (13)$$

wobei $W_d$ die Fourier-Transformation der benutzten Fensterfunktion in Range bezeichnet. $t_i$ bezeichnet dabei die Anfangszeit der FMCW-Rampen ("langsaem Zeit" bzw. "slow time"). Für die gemessenen Abstände zum Ziel in beiden Radaren gilt $d_1 \approx d_2 = d_0$ aufgrund der Fernfeldnäherung $d_0 \gg b_1$. Durch Interferenz beider Signale ergibt sich

$$s(d, t_i) = s_1^*(d, t_i) \cdot s_2(d, t_i) = \delta_d(d - 2d_0) \cdot \exp\left(\mathrm{j}\frac{2\pi}{\lambda}b_l \sin(\theta_0 + \omega_a t_i)\right), \qquad (14)$$

wobei $|\cdot|^*$ die komplexe Konjugation bezeichnet. Mit der Näherung $\omega_a t_i \approx 0$ und durch Taylor-Reihenentwicklung lässt sich (14) approximieren als

$$s(d, t_i) \approx W_d(d - 2d_0) \cdot \exp\left(\mathrm{j}\frac{2\pi}{\lambda}(b_l \sin(\theta_0) + b_l \cos(\theta_0)\omega_a t_i)\right). \qquad (15)$$

Eine nachfolgende Fourier-Transformation entlang $t_i$ ergibt

$$s(d, 2\pi f_{\mathrm{a}}) = \mathcal{F}\{s(d, t_i), t_i\}$$

$$= W_d(d - 2d_0) \cdot W_{\omega_a}\left(2\pi f_{\mathrm{a}} - \frac{2\pi}{\lambda}b_l \cos(\theta_0)\omega_{\mathrm{a}}\right) \qquad (16)$$

$$\cdot \exp\left(\mathrm{j}\frac{2\pi}{\lambda}b_l \sin(\theta_0)\right).$$

$f_{\mathrm{a}}$ bezeichnet dabei die resultierende Signalfrequenz im Bildbereich (Azimutrichtung). Die Winkelgeschwindigkeit $\omega_{\mathrm{a}}$ / tangentiale Geschwindigkeit $v_t$ ergeben sich dann zu

$$v_{\mathrm{t}} = \omega_{\mathrm{a}} d_0 = \frac{\lambda d_0}{b_{\mathrm{l}} \cos(\theta_0)} f_{\mathrm{a,max}}, \qquad (17)$$

wobei $f_{\mathrm{a,max}}$ die Position des Maximums im 2D-Spektrum $s(d, 2\pi f_a)$ entlang der $f_a$ Richtung (Azimutrichtung im Bildbereich) bezeichnet.

Die Interferenz analog (14) kann auch auf Range-Doppler-komprimierte Daten angewendet werden. Die Multiplikation in (14) muss dann durch eine Faltung ersetzt werden.

Durch die Schätzung von $v_r$ mithilfe des Standard-Range-Doppler-Verfahrens und der orthogonal dazu stehenden tangentialen Geschwindigkeit $v_t$ aus (17) lässt sich der vollständige Geschwindigkeitsvektor bestimmen. Dies setzt die Kenntnis des Winkels zum Ziel $\theta_0$ voraus. Dieser lässt sich z. B. mit bekannten Winkelschätzungstechniken (Beamforming) bestimmen.

**Auflösung und Eindeutigkeitsbereich**

Die Auflösung der tangentialen Geschwindigkeitsschätzung für ein Rechteckfenster lässt sich berechnen durch Einsetzen von $f_a = \frac{1}{NT}$ in (17) zu

$$\Delta v_{\mathrm{t}} = \frac{\lambda d_0}{b_{\mathrm{l}} \cos(\theta_0)\, NT}. \qquad (18)$$

(Für Hann-Fensterung ist die Auflösung $\approx 2$ Mal geringer.)

Durch Einsetzen von $f_a = \frac{f_{\mathrm{sampling}}}{2} = \frac{1}{2T}$ in (17) erhält man

$$v_{\mathrm{t,max}} = \pm \frac{\lambda d_0}{b_{\mathrm{l}} \cos(\theta_0)\, 2T}. \qquad (19)$$

für den Eindeutigkeitsbereich.

Sowohl Auflösung als auch Eindeutigkeitsbereich sind folglich vom Abstand und Winkel zum Ziel abhängig. Eine Vergrößerung der Apertur $b_l$ führt zu einer Verbesserung der Auflösung und Verringerung des Eindeutigkeitsbereichs. Wenn weitere Empfangseinheiten zwischen den vorhandenen zwei vorhanden sind, führt dies zu einer Vergrößerung des Eindeutigkeitsbereichs.

**Allgemeine Lösung zur kohärenten Prozessierung verteilter Radar-Stationen zur Bestimmung der vektoriellen Zielgeschwindigkeit (auch im Nahfeld)**

Es werden mindestens zwei grob-synchronisierte Radareinheiten (Sende-Empfangseinheiten) vorausgesetzt. Der Abstand zwischen den Einheiten beträgt $b_l$ (siehe Fig. 2; Fig. 2 zeigt zwei Sende-Empfangseinheiten in einem Abstand von $b_l$ zueinander, die nach dem FMCW Range-Doppler Prinzip näherungsweise gleichzeitig zum Ziel messen). Beide Radareinheiten sind quasi monostatisch (jeweiliger Abstand zwischen Rx und Tx $<<b_l$). Für den Abstand zum Ziel $d_0$ gilt nicht unbedingt $d_0 \gg b_l$, d.h. das Ziel kann sich im Nahfeld befinden.

Das Signalmodell nach dem FMCW Range-Doppler-Messprinzip lässt sich in diesem Fall nach Range-Kompression ausdrücken als:

$$s_1(d, t_i) = A_1 W_d\big(d - d_{\mathrm{rt,0,1}}\big) \cdot \exp\left(\mathrm{j}\frac{2\pi}{\lambda} d_{\mathrm{rt,1}}(t_i)\right),$$
$$s_2(d, t_i) = A_2 W_d\big(d - d_{\mathrm{rt,0,2}}\big) \cdot \exp\left(\mathrm{j}\frac{2\pi}{\lambda} d_{\mathrm{rt,2}}(t_i)\right). \qquad (20)$$

$d_{\mathrm{rt},n}(t_i)$ beschreibt den Doppelwegabstand von der Radar Tx-Antenne zum Ziel und zurück zur Rx-Antenne:

$$d_{\mathrm{rt},n}(t_i) = \left\| \boldsymbol{p_{\mathrm{Tx},n}} - \boldsymbol{p_t}(t_i) \right\| + \left\| \boldsymbol{p_t}(t_i) - \boldsymbol{p_{\mathrm{Rx},n}} \right\| \text{ with } \boldsymbol{p_t}(t_i) = [x_0, y_0] + [v_x, v_y] t_i. \qquad (21)$$

$\boldsymbol{p_{\mathrm{Tx},n}}$ / $\boldsymbol{p_{\mathrm{Rx},n}}$ ist dabei die 2D Position der Tx- / Rx-Antenne von Radareinheit n. $\boldsymbol{p_t}$ ist die Position des Ziels in 2D. $\|\cdot\|$ bezeichnet die euklidische Norm. Für $t_i = 0$ gilt $d_{\mathrm{rt},0,n} = d_{\mathrm{rt},n}(0)$.

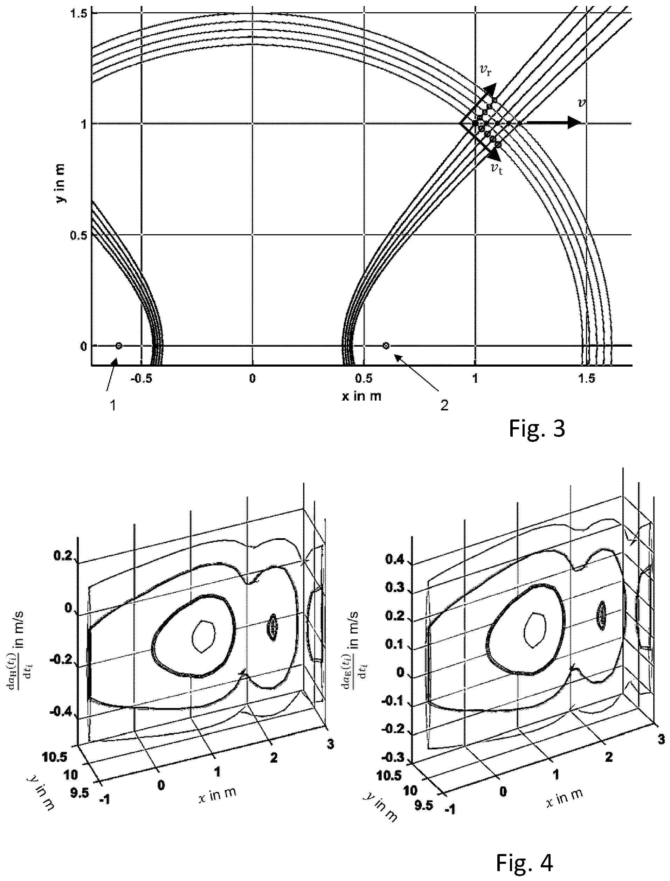

Fig. 1 zeigt eine Darstellung der Bewegung eines Ziels im Nahfeld einer 2-Radareinheiten-Anordnung als Bewegung entlang von Ellipsen/Hyperbeln. Von der Geometrie in Fig. 3 ist ersichtlich, dass die Position des Ziels durch den Schnitt einer Ellipse und einer Hyperbel mit beiden Radaren in den Brennpunkten bestimmt werden kann. Die Ellipse wird durch den Parameter

$$a_{\mathrm{E}} = \frac{0.5(d_{\mathrm{rt},2} + d_{\mathrm{rt},1})}{2} \qquad (22)$$

und die Hyperbel durch

$$a_{\mathrm{H}} = \frac{0.5(d_{\mathrm{rt},2} - d_{\mathrm{rt},1})}{2} \qquad (23)$$

beschrieben. Die sich daraus ergebenden Ellipsen-/Hyperbelgleichungen sind Ellipse:

$$\frac{x^2}{a_{\mathrm{E}}^2} + \frac{y^2}{b_{\mathrm{E}}^2} = 1 \text{ mit } b_{\mathrm{E}}^2 = a_{\mathrm{E}}^2 - c_{\mathrm{HE}}^2 \text{ und } c_{\mathrm{HE}} = \frac{b_1}{2}; \qquad (24)$$

Hyperbel:

$$\frac{x^2}{a_{\mathrm{H}}^2} - \frac{y^2}{b_{\mathrm{H}}^2} = 1 \text{ mit } b_{\mathrm{H}}^2 = c_{\mathrm{HE}}^2 - a_{\mathrm{H}}^2. \qquad (25)$$

Der Schnittpunkt der Ellipse mit der Hyperbel $[x_0, y_0]$ ist (streng genommen existieren zwei Schnittpunkte; einer davon lässt sich jedoch leicht durch Plausibilitätsbetrachtungen auswählen - der Andere befindet sich hinter den Radareinheiten)

$$x_0 = -\frac{a_{\mathrm{E}} a_{\mathrm{H}}}{c_{\mathrm{HE}}},$$
$$y_0 = \frac{\sqrt{-c_{\mathrm{HE}}^4 + (a_{\mathrm{H}}^2 + a_{\mathrm{E}}^2) c_{\mathrm{HE}}^2 - a_{\mathrm{E}}^2 a_{\mathrm{H}}^2}}{c_{\mathrm{HE}}} \qquad (26)$$

Für ein bewegtes Ziel erhält man $x = x_0 + v_x t_i$ und $y = y_0 + v_y t_i$ und somit $a_{\mathrm{E}}(t_i)$ und $a_{\mathrm{H}}(t_i)$ (diese lineare Gleichungen gelten für den Fall $\|v\| T \ll d_{\mathrm{rt}}$, wobei $T$ die FMCW Rampendauer ist).

Eine direkte Interferenz beider Signale ist hier ggf. nicht möglich, da $d_{\mathrm{rt},0,1} = d_{\mathrm{rt},0,2}$ ("range migration"). Stattdessen wird vorzugsweise ein holografischer Interferenz-Ansatz verfolgt:

$$s_{\Delta}(x_{\mathrm{hyp}}, y_{\mathrm{hyp}}, t_i) = A_1 s_1\big(d_{1,\mathrm{hyp}}(x_{\mathrm{hyp}}, y_{\mathrm{hyp}}), t_i\big)^* \cdot A_2 s_2\big(d_{2,\mathrm{hyp}}(x_{\mathrm{hyp}}, y_{\mathrm{hyp}}), t_i\big)$$

$$= A_{12} W_{xy}(x - x_0, y - y_0) \cdot \exp\left( \mathrm{j} \frac{2\pi}{\lambda} \big( d_{\mathrm{rt},2}(t_i) - d_{\mathrm{rt},1}(t_i) \big) \right) \qquad (27)$$

$$= A_{12} W_{xy}(x - x_0, y - y_0) \cdot \exp\left( \mathrm{j} \frac{2\pi}{\lambda} 4 a_{\mathrm{H}}(t_i) \right),$$

Mit

$$d_{n,\mathrm{hyp}}(x_{\mathrm{hyp}}, y_{\mathrm{hyp}}) = \left\| \boldsymbol{p_{\mathrm{Tx},n}} - \boldsymbol{p_{t,\mathrm{hyp}}} \right\| + \left\| \boldsymbol{p_{t,\mathrm{hyp}}} - \boldsymbol{p_{\mathrm{Rx},n}} \right\| \text{ with } \boldsymbol{p_{t,\mathrm{hyp}}} = [x_{\mathrm{hyp}}, y_{\mathrm{hyp}}]. \qquad (28)$$

$p_{t,hyp}$ ist dabei eine Hypothese für die Zielposition in 2D. Wenn beide Signale ohne die komplexe Konjugation interferiert werden, erhält man

$$s_{\Sigma}\big(x_{hyp}, y_{hyp}, t_i\big) = A_1 s_1\big(d_{1,hyp}(x_{hyp}, y_{hyp}), t_i\big) \cdot A_2 s_2\big(d_{2,hyp}(x_{hyp}, y_{hyp}), t_i\big)$$

$$= A_{12} W_{xy}(x - x_0, y - y_0) \cdot \exp\left(j\frac{2\pi}{\lambda}\big(d_{rt,2}(t_i) + d_{rt,1}(t_i)\big)\right) \qquad (29)$$

$$= A_{12} W_{xy}(x - x_0, y - y_0) \cdot \exp\left(j\frac{2\pi}{\lambda}4a_E(t_i)\right).$$

Die Zielbewegung lässt sich folglich als eine Bewegung $a_E(t_i)$ von Ellipse auf Ellipse entlang einer Hyperbel entsprechend einer radialen Geschwindigkeit und als eine Bewegung $a_H(t_i)$ senkrecht dazu von Hyperbel auf Hyperbel entlang einer Ellipse entsprechend einer tangentialen Geschwindigkeit interpretieren (vgl. Fig. 3).

Eine darauffolgende Fourier-Transformation entlang $t_i$ ergibt

$$s_{\Delta}\big(x_{hyp}, y_{hyp}, \omega_{\Delta}\big) = \mathcal{F}\{s_{\Delta}\big(x_{hyp}, y_{hyp}, t_i\big), t_i\}$$

$$= A_{12} W_{xy}(x - x_0, y - y_0) \cdot W_{\Delta}\left(\omega_{\Delta} - \frac{2\pi}{\lambda}4\frac{da_H(t_i)}{dt_i}\right) \qquad (30)$$

$$\cdot \exp\left(j\frac{4\pi}{\lambda}\big(d_{rt,0,2} - d_{rt,0,1}\big)\right),$$

$$s_{\Sigma}\big(x_{hyp}, y_{hyp}, \omega_{\Sigma}\big) = \mathcal{F}\{s_{\Sigma}\big(x_{hyp}, y_{hyp}, t_i\big), t_i\}$$

$$= A_{12} W_{xy}(x - x_0, y - y_0) \cdot W_{\Sigma}\left(\omega_{\Sigma} - \frac{2\pi}{\lambda}4\frac{da_E(t_i)}{dt_i}\right) \qquad (31)$$

$$\cdot \exp\left(j\frac{4\pi}{\lambda}\big(d_{rt,0,2} + d_{rt,0,1}\big)\right).$$

Das Ergebnis dieser Transformation ist in Fig. 4 dargestellt. Fig. 4 zeigt ein resultierendes 3D-Spektrum zur Schätzung der tangentialen/radialen Geschwindigkeit bei gegebenen *x* und *y*. Beide Spektren haben die gleiche Form, befinden sich aber an unterschiedlicher Stelle entlang der z-Achse.

Eine Maximum-Suche entlang der $\omega_{\Delta}$ bzw. $\omega_{\Sigma}$ Richtung im resultierenden 3D Spektrum liefert

$$\frac{da_E(t_i)}{dt_i} = \frac{\lambda}{8\pi}\omega_{\Sigma,max} \quad \text{und} \quad \frac{da_H(t_i)}{dt_i} = \frac{\lambda}{8\pi}\omega_{\Delta,max}. \qquad (32)$$

Mithilfe der partiellen Ableitung von (26) und (32), lassen sich die Komponenten des Geschwindigkeitsvektors berechnen zu

$$v_{r,x} = \frac{\partial x}{\partial a_E}\frac{da_E(t_i)}{dt_i} \quad \text{und} \quad v_{r,y} = \frac{\partial y}{\partial a_E}\frac{da_E(t_i)}{dt_i};$$

$$\qquad (33)$$

$$v_{t,x} = \frac{\partial x}{\partial a_H}\frac{da_H(t_i)}{dt_i} \quad \text{und} \quad v_{t,y} = \frac{\partial y}{\partial a_H}\frac{da_H(t_i)}{dt_i}.$$

Der Geschwindigkeitsvektor in kartesischen Koordinaten ist dann

$$v_x = v_{r,x} + v_{t,x},$$

$$v_y = v_{r,y} + v_{t,y}. \qquad (34)$$

**Erhalt des Eindeutigkeitsbereichs**

Die Phasenaddition in (29) führt zu einer Verdoppelung der gemessenen Doppler-Frequenz, was die Halbierung des eindeutigen Messbereichs als Folge hat. Dies lässt sich vorzugsweise vermeiden, indem die Signalfrequenz vor der Interferenzbildung halbiert wird. Für ein generisches Signal in analytischer Form $s(t) = A\exp(j\phi(t))$ lässt sich das ausdrücken als

$$s_{f/2} = A \exp\left( j \cdot \mathrm{unwrap}\left( \frac{\phi(t)}{2} \right) \right). \qquad (35)$$

(Frequenzskalierungseigenschaft der Fourier-Transformation). Damit lässt sich der Eindeutigkeitsbereich in Doppler-Richtung zumindest im Wesentlichen vollständig erhalten.

**Kompensation von Doppler-Shift**

Der Doppler-Shift lässt sich vorzugsweise kompensieren, indem für jedes Ziel die Doppler-Geschwindigkeit bestimmt wird und damit der Abstand korrigiert wird. Alternativ lässt sich ein Optimalfilteransatz ähnlich zu [12] verfolgen. Die in dieser Erfindung vorgestellten Algorithmen lassen sich dann vorzugsweise unverändert auf das Ergebnis anwenden.

**Hohe Bandbreite oder hohe Geschwindigkeit**

Falls das Radar über eine hohe Bandbreite verfügt oder sich das Ziel sehr schnell bewegt, so dass die Näherung

$4\pi \frac{B}{cT} v_r t_i \approx 0$ nicht mehr erfüllt ist, lässt sich die FFT-basierte Doppler-Kompression ggf. nicht mehr anwenden, da sich der Abstand zum Ziel merklich von Rampe zu Rampe während des Bursts ändert.

Dieser Fall lässt sich ebenso mit einem Optimalfilteransatz ähnlich zu [12] abdecken. Alternativ lässt sich die Range-Doppler-Kompression mithilfe der fraktionalen Fourier-Transformation (FRFT) durchführen. Die in dieser Erfindung vorgestellten Algorithmen lassen sich dann unverändert auf das Ergebnis anwenden.

**Nebenkeulenunterdrückung**

Falls beide Radareinheiten über zwei oder mehr Antennen verfügen, lässt sich ein Range-Doppler-komprimiertes Signal zusätzlich in Azimut-Richtung mithilfe einer Fourier-Transformation oder von digitalen Beamforming-Algorithmen (Bartlett, Capon, MUSIC, ...) komprimieren. Das vorgestellte Verfahren lässt sich dann unverändert auf das Ergebnis anwenden. Dies führt zu einer Unterdrückung der Nebenkeulen im resultierenden [$x$, $y$, $v_x$, $v_y$]-Bild.

**Zuordnung der Ziele im 3D Spektrum für radiale und tangentiale Geschwindigkeit zueinander**

Bei Vorhandensein von mehr als einem Ziel in einer räumlichen Auflösungszelle lassen sich Ziele anhand der Amplitude voneinander trennen, da das Signal, das von einem Ziel stammt, in beiden Spektren die gleiche Amplitude $A_{12}$, aber unterschiedliche Frequenz und Phase hat (vgl. Gleichung (30) und (31) und Fig. 4). Falls zwei oder mehr Ziele mit gleicher Amplitude in einer räumlichen Auflösungszelle vorhanden sind, kann mithilfe eines nachfolgenden Tracking-Algorithmus eine Zieltrennung erfolgen.

**Erweiterung auf 3D / mehr als 2 Radarstationen**

Die 3D vektorielle Geschwindigkeitsschätzung eines Ziels ist möglich mithilfe von mindestens drei Radareinheiten (Sende-Empfangseinheiten), die räumlich positioniert sind. Das Ergebnis ergibt sich dann aus dem Schnitt von zwei Paaren, die jeweils aus einem Ellipsoid und einem Hyperboloid bestehen.

Das Verfahren lässt sich verallgemeinern auf eine beliebige Anzahl von Sende-Empfangseinheiten und Radaranordnungen, insbesondere wenn anstelle der Fourier-Transformation-Prozessierung ein Optimalfilter benutzt wird. Für dieses Verfahren wird eine Hypothese für jede [$x$, $y$, $z$, $v_x$, $v_y$, $v_z$]- Kombination im Suchbereich gebildet und mit den Messdaten verglichen. Für ein Ziel an der hypothetischen Position $\boldsymbol{p}_{hyp} = [x_{hyp}, y_{hyp}, z_{hyp}]$ und das Radar Nummer $n$ an der Position $\boldsymbol{p}_n$ lässt sich der Abstand $d_n(x_{hyp}, y_{hyp}, z_{hyp})$ zwischen Radar $n$ und Ziel und der Einheitsvektor $\boldsymbol{v_n}(x_{hyp}, z_{hyp}, z_{hyp})$ vom Radar zum Ziel berechnen zu

$$d_n(x_{\text{hyp}}, y_{\text{hyp}}, z_{\text{hyp}}) = \left\| \boldsymbol{p}_{\text{Tx},n} - \boldsymbol{p}_{\text{t,hyp}} \right\|,$$

$$\boldsymbol{v_n}(x_{\text{hyp}}, y_{\text{hyp}}, z_{\text{hyp}}) = \frac{\boldsymbol{p}_{\text{Tx},n} - \boldsymbol{p}_{\text{t,hyp}}}{\left\| \boldsymbol{p}_{\text{Tx},n} - \boldsymbol{p}_{\text{t,hyp}} \right\|}. \tag{36}$$

Für das Messsignal $s_n(d, t_i)$ nach dem FMCW Range-Doppler-Prinzip in Radar $n$ lässt sich folgendes Optimalfilter formulieren

$$a_n(x_{\text{hyp}}, y_{\text{hyp}}, z_{\text{hyp}}, v_{\text{x,hyp}}, v_{\text{y,hyp}}, v_{\text{z,hyp}}, t_i)$$

$$= \exp\left(-j \frac{4\pi}{\lambda} v_{\text{r,hyp},n}(x_{\text{hyp}}, y_{\text{hyp}}, z_{\text{hyp}}, v_{\text{x,hyp}}, v_{\text{y,hyp}}, v_{\text{z,hyp}}) t_i\right), \tag{37}$$

mit der Hypothese $v_{\text{r,hyp},n}$ ($v_{\text{x,hyp}}, v_{\text{y,hyp}}, v_{\text{z,hyp}}$) für die Radialgeschwindigkeit (Doppler-Geschwindigkeit):

$$v_{\text{r,hyp},n}(x_{\text{hyp}}, y_{\text{hyp}}, z_{\text{hyp}}, v_{\text{x,hyp}}, v_{\text{y,hyp}}, v_{\text{z,hyp}}) = \boldsymbol{v_n}(x_{\text{hyp}}, y_{\text{hyp}}, z_{\text{hyp}}) \cdot \boldsymbol{v_{\text{hyp}}}$$

$$= \boldsymbol{v_n}(x_{\text{hyp}}, y_{\text{hyp}}, z_{\text{hyp}}) \cdot \begin{bmatrix} v_{\text{x,hyp}} \\ v_{\text{y,hyp}} \\ v_{\text{z,hyp}} \end{bmatrix}. \tag{38}$$

$| \cdot |$ bezeichnet dabei das Skalarprodukt von zwei Vektoren. Das Ergebnis berechnet sich somit zu

$$m_{\text{r,hyp},n}(x_{\text{hyp}}, y_{\text{hyp}}, z_{\text{hyp}}, v_{\text{x,hyp}}, v_{\text{y,hyp}}, v_{\text{z,hyp}})$$

$$= \sum_{n=1}^{N_{\text{rad}}} \sum_{i=1}^{N_{\text{sw}}} s_n(d(x_{\text{hyp}}, y_{\text{hyp}}, z_{\text{hyp}}), t_i) a_n(x_{\text{hyp}}, y_{\text{hyp}}, z_{\text{hyp}}, v_{\text{x,hyp}}, v_{\text{y,hyp}}, v_{\text{z,hyp}}, t_i) \tag{39}$$

mit der Radar-Einheiten-Anzahl $N_{\text{rad}}$ und FMCW-Sweeps-Anzahl $N_{\text{sw}}$. Durch Maximum-Suche im resultierenden 4D-Pseudospektrum lässt sich die Zielposition und vektorielle Geschwindigkeit bestimmen. Für 3D-Probleme erhält man nach analoger Vorgehensweise ein 6D Spektrum.

Dieses Verfahren ist ggf. rechenaufwändiger als das davor vorgestellte FFT-basierte Verfahren.

**Anwendung des Verfahrens auf einen direkten Pfad und einen Kreuzpfad, der nach dem Verfahren I und/oder II erhalten wurde**

Wenn zwei Radare zu einem Ziel nach dem Verfahren I und/oder II messen, erhält man zwei direkte Messpfade ($d_{\text{rt},11} = 2d_1$: Radar 1 → Ziel → Radar 1, $d_{\text{rt},22} = 2d_2$: Radar 2 → Ziel → Radar 2) und zwei Kreuzpfade ($d_{\text{rt},12} = d_1 + d_2$: Radar 1 → Ziel → Radar 2, $d_{\text{rt},21} = d_2 + d_1$: Radar 2 → Ziel → Radar 1). Da das Verfahren I und/oder II die phasenkohärente Auswertung der Kreuzpfade ermöglicht, lassen sich diese auch zur Schätzung der vektoriellen Geschwindigkeit nach dem beschriebenen Verfahren verarbeiten.

Wenn man die Hyperbel- und Ellipsenparameter aus Gleichungen (22) und (23) durch $d_{\text{rt},11}$ und $d_{\text{rt},21}$ ausdrückt, erhält man:

$$a_{\text{E}} = \frac{d_{\text{rt},21}}{2} = \frac{d_2 + d_1}{2} \tag{40}$$

und

$$a_{\text{H}} = \frac{d_{\text{rt},21} - d_{\text{rt},11}}{2} = \frac{d_2 - d_1}{2}. \tag{41}$$

Das Verfahren lässt sich somit unverändert auch auf eine Kombination aus einem direkten Pfad und einem Kreuzpfad anwenden. Dies hat den Vorteil, dass man Ziele sieht, die im Kreuzpfad und in einem direkten Pfad, aber nicht in beiden direkten Pfaden sichtbar sind.

**Anwendungsbeispiele für die vektorielle Geschwindigkeitsschätzung nach dem vorgeschlagenen Verfahren**

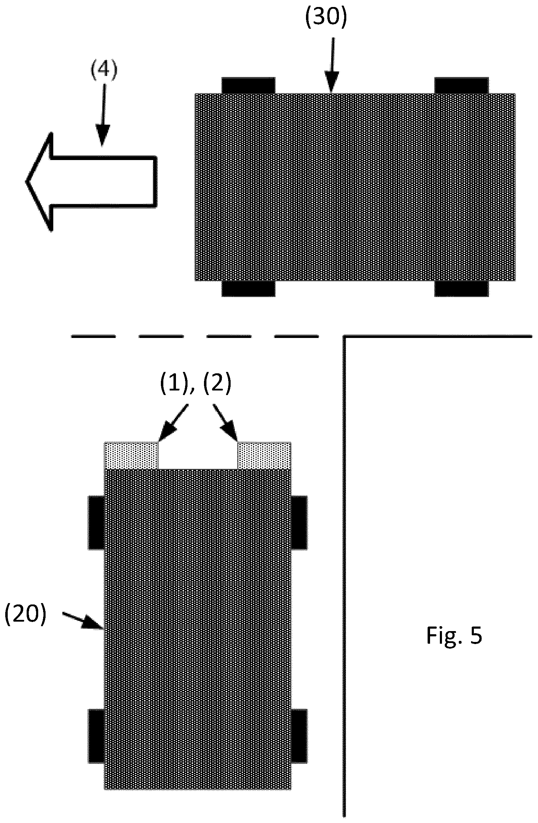

Fig. 5 zeigt eine Anwendung im Automotive-Bereich mit einem Auto (20), ausgestattet mit zwei Radaren (1), (2), die durch ein Signal näherungsweise gleichzeitig getriggert werden. Ein weiteres Auto (30) fährt in Richtung des Pfeils (4).

Das Auto (20) kann z. B. an einer Kreuzung warten oder auf die Kreuzung zufahren. Mit einer Standard-Prozessierung der Radar-Daten auf Auto (20) kann man den Abstand und den Winkel zum Auto (30) bestimmen. Des Weiteren kann man die relative radiale Geschwindigkeit bestimmen. Da sich in diesem Fall das Auto (30) näherungsweise tangential zur Verbindungsachse zwischen Radar (1), (2) und Ziel, also Auto (30), bewegt, wäre die Doppler-Frequenz $\approx 0$ Hz. Die gemessene radiale Geschwindigkeit wäre folglich $\approx 0$ m/s. Es lässt sich also nicht bestimmen, ob das Auto (30) fährt oder steht. Mit dem gemäß der Erfindung vorgeschlagenen Verfahren können die Signale der Radarstationen (1),(2) kohärent prozessiert werden, obwohl sie nicht (phasen-)synchronisiert sind, und daraus die (vollständige) vektorielle Geschwindigkeit des Autos (30) bestimmt werden. Diese Information kann mit weiteren Algorithmen zur Umfelderfassung fusioniert werden, was für Fahrerassistenzsysteme und autonomes Fahren von Vorteile ist. Mithilfe dieses Verfahren ggf. in Kombinationen mit bereits vorhandenen Verfahren kann jedem Punkt aus dem Radarbild eine Amplitude (Power), eine Geschwindigkeit und eine Bewegungsrichtung zugeordnet werden.

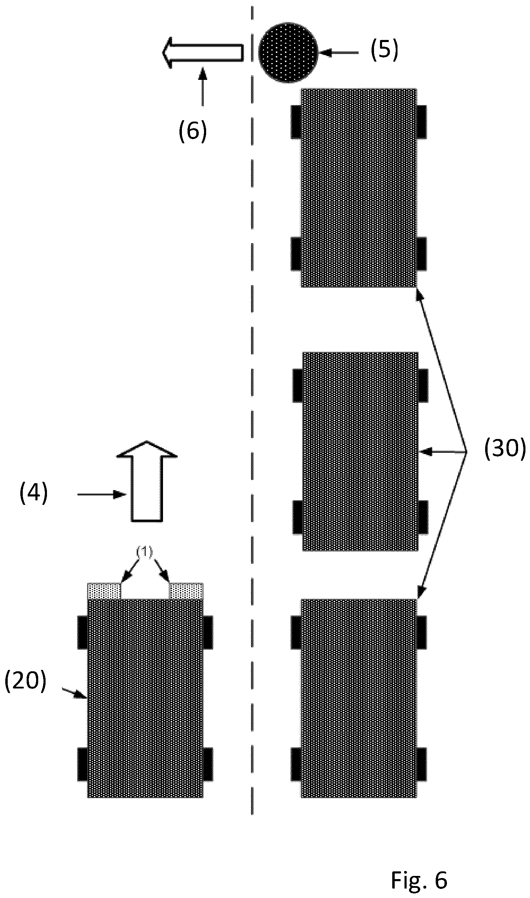

Fig. 6 zeigt eine weitere Anwendung mit einem Auto (20), ausgestattet mit zwei Radaren (1), (2), die durch ein Signal näherungsweise gleichzeitig getriggert werden, wobei das Auto fährt in Richtung des Pfeils (4) fährt. Am Straßenrand sind geparkte Autos (30) vorhanden. Ein Fußgänger (5) geht in Richtung des Pfeils (6) auf die Fahrbahn.

Wenn sich das Auto (20) in Richtung des Pfeils (4) bewegt und am Straßenrand geparkte Autos (30) vorhanden sind, würde das Auto (20) bis zum letzten Moment den Fußgänger (5), der sich in Richtung des Pfeils (6) bewegt, nicht erkennen, da er von den geparkten Autos abgedeckt wäre. Eine zusätzliche Messung der tangentialen Geschwindigkeit, sobald der Fußgänger vom Radar gesehen werden kann, kann eine schnellere Reaktion ermöglichen und eventuell einen Unfall verhindern.

Insgesamt umfasst die vorliegende Erfindung insbesondere auch eine besonders genaue Schätzung der (2D- oder 3D-) vektoriellen Geschwindigkeit von Objekten (Zielen). Dazu können mindestens zwei (räumlich getrennte) FMCW-Radare vorgesehen sein, die insbesondere nach dem Range-Doppler-Prinzip messen. Diese FMCW-Radare sind vorzugsweise nur grob zeitsynchronisiert. Beide Stationen können (näherungsweise) gleichzeitig getriggert werden und senden und empfangen FMCW-Bursts (mit einem bekannten Frequenz-Offset zueinander). Die vollständige vektorielle Geschwindigkeit der Objekte (Ziele) in der Umgebung kann dann aus einer Interferenz von resultierenden (Basisband-)Signalen geschätzt werden.

An dieser Stelle sei darauf hingewiesen, dass alle oben beschriebene Teile bzw. Funktionen für sich alleine gesehen und in jeder Kombination, insbesondere die in den Zeichnungen dargestellten Details, als erfindungswesentlich beansprucht werden. Abänderungen hiervon sind dem Fachmann geläufig.

**Patentansprüche**

1. Radar-Verfahren zur Bestimmung der Winkellage, des Ortes und/oder der, insbesondere vektoriellen, Geschwindigkeit eines Zieles, wobei eine erste Sende-Empfangseinheit (1) und mindestens eine zweite, insbesondere von der ersten Sende-Empfangseinheit (1) räumlich getrennte, zweite Sende-Empfangseinheit (2), die nicht synchronisiert sind, ein Messbeginn der ersten Sende-Empfangseinheit (1) und der zweiten Sende-Empfangseinheit (2) jedoch mit einer zeitlichen Abweichung $\Delta t_n$ drahtlos oder drahtgebunden getriggert werden, wobei Messungen der Sende-Empfangseinheiten (1, 2) kohärent prozessiert werden.

2. Verfahren nach Anspruch 1, wobei

   a) mindestens zwei Messsignale, die von einem gemeinsamen Ziel reflektiert wurden, miteinander interferiert werden, insbesondere durch komplex konjugierte Multiplikation und/oder
   b) Range-Doppler-komprimierte Signale miteinander interferiert werden, insbesondere durch Faltung und/oder
   c) eine Holographie, insbesondere in in xy-Richtung durchgeführt wird und eine Interferenz entlang einer Doppler-Richtung.

3. Verfahren nach Anspruch 2, wobei aus einem resultierenden Signal eine vektorielle Geschwindigkeit des Ziels bestimmt wird.

4. Verfahren nach einem der vorangehenden Ansprüche, wobei sich das Ziel im Nahfeld oder, alternativ, im Fernfeld befindet.

5. Verfahren einem der vorangehenden Ansprüche, wobei die Sende-Empfangseinheiten (1, 2) eine verteilte Apertur bilden.

6. Verfahren nach einem der vorangehenden Ansprüche, wobei eine Ortung des Ziels nach dem Holografie-Prinzip erfolgt.

7. Verfahren nach einem der vorangehenden Ansprüche, wobei das Verfahren ein FMCW-Radarverfahren ist und/oder ein Verfahren ist, das nach dem Range-Doppler-Prinzip arbeitet.

8. Verfahren nach einem der vorangehenden Ansprüche, wobei die mindestens zwei Sende-Empfangseinheiten (1, 2) monostatisch sind.

9. Verfahren nach einem der vorangehenden Ansprüche, wobei, insbesondere bei der Alternative c) des Anspruches 2, eine Fourier-Transformation vorzugsweise entlang einer langsamen Zeit durchgeführt wird und/oder eine Peak-Suche zur Bestimmung einer Ellipsen-/Hyperbel-Geschwindigkeit, insbesondere in mehreren oder allen Pixeln, durchgeführt wird und/oder eine Bestimmung von Ellipsen-/Hyperbelparametern, insbesondere in mehreren oder allen Pixeln, durchgeführt wird und/oder eine Transformation der Ellipsen-/Hyperbel-Geschwindigkeit in eine, vorzugsweise kartesische, vektorielle Geschwindigkeit durchgeführt wird.

10. Verfahren nach einem der vorangehenden Ansprüche, wobei eine Signalfrequenz vor einer Interferenzbildung halbiert wird und/oder

   wobei eine Doppler-Geschwindigkeit bestimmt wird, insbesondere zur zumindest teilweisen Kompensation einer Doppler-Shift und/oder
   wobei ein Optimalfilteransatz zum Einsatz kommt, insbesondere zur zumindest teilweisen Kompensation einer Doppler-Shift und/oder bei einer vergleichsweise hohen Bandbreite des Radars und/oder einer vergleichsweise hohen Geschwindigkeit des Ziels, und/oder
   wobei eine Range-Doppler-Kompression mittels einer fraktionalen Fourier-Transformation (FRFT) durchgeführt wird, insbesondere bei einer vergleichsweise hohen Bandbreite des Radars und/oder einer vergleichsweise hohen Geschwindigkeit des Ziels und/oder
   wobei eines oder mehrere von ggf. Range-Doppler-komprimierten Signalen zusätzlich in Azimut-Richtung, vorzugsweise mittels Fourier-Transformation und/oder digitaler Beamforming-Algorithmen komprimiert wird, insbesondere zur Nebenkeulenunterdrückung.

11. Verfahren nach einem der vorangehenden Ansprüche, wobei mindestens drei Sende-Empfangseinheiten zum Einsatz kommen, wobei vorzugsweise eine 3D-Geschwindigkeitsbestimmung durchgeführt wird, insbesondere durch Bildung eines Schnittes von zwei Paaren, die jeweils aus einem Ellipsoid und einem Hyperboloid bestehen und/oder wobei ein Optimalfilteransatz zum Einsatz kommt, wobei eine Hypothese für mehrere bzw. alle $[x, y, z, v_x, v_y, v_z]$- Kombinationen in einem Suchbereich gebildet werden und mit Messdaten verglichen werden.

12. Verfahren nach einem der vorangehenden Ansprüche, wobei

   - in der ersten Sende-Empfangseinheit (1) ein erstes Signal erzeugt und über einen Pfad gesendet, insbesondere ausgestrahlt wird,
   - in der zweiten Sende-Empfangseinheit (2) ein weiteres erstes Signal erzeugt und über den Pfad gesendet, insbesondere ausgestrahlt wird,
   - ein erstes Vergleichssignal aus dem erstem Signal der ersten Sende-Empfangseinheit (1) und aus einem solchen von der zweiten Sende-Empfangseinheit (2), über den Pfad empfangenen, ersten Signal gebildet wird und
   - ein weiteres Vergleichssignal aus dem erstem Signal der zweiten Sende-Empfangseinheit (2) und aus einem solchen von der ersten Sende-Empfangseinheit (1), über den Pfad empfangenen, ersten Signal gebildet wird,
   - wobei das weitere Vergleichssignal vorzugsweise von der zweiten Sende-Empfangseinheit (2) zu der ersten Sende-Empfangseinheit (1) übertragen, insbesondere kommuniziert wird und/oder

   wobei vorzugsweise ein Vergleichs-Vergleichssignal aus dem ersten Vergleichssignal und dem weiteren Vergleichssignal gebildet wird und/oder wobei in einem ersten Schritt Abweichungen der Vergleichssignale, die durch systematische Abweichungen in den Sende-Empfangseinheiten hervorgerufen werden, kompensiert werden und in einem zweiten Schritt zumindest ein komplexer Wert aus einem ersten der beiden Vergleichssignale oder aus einem Signal, das aus diesem ersten Vergleichssignal abgeleitet wurde, dazu verwendet wird, zumindest einen komplexen Wert des zweiten der beiden Vergleichssignale oder einen Wert eines Signals, das aus diesem zweiten Vergleichssignal abgeleitet wurde, anzupassen und so ein angepasstes Signal zu bilden, wobei die Anpassung derart geschieht, dass durch eine mathematische Operation die vektorielle Summe oder die Differenz der komplexen Werte gebildet wird oder die Summe oder die Differenz der Phasen der komplexen Werte gebildet wird.

13. Radar-System zur Bestimmung der Winkellage, des Ortes und/oder der, insbesondere vektoriellen, Geschwindigkeit eines Zieles, insbesondere zur Durchführung des Verfahrens nach einem der Ansprüche 1 bis 12, wobei eine erste Sende-Empfangseinheit (1) und mindestens eine zweite Sende-Empfangseinheit (2) vorgesehen sind, die nicht miteinander synchronisiert sind, wobei eine Steuereinrichtung vorgesehen ist, die konfiguriert ist, einen Messbeginn der ersten Sende-Empfangseinheit (1) und der zweiten Sende-Empfangseinheit (2) mit einer zeitlichen Abweichung $\Delta t_n$ drahtlos oder drahtgebunden zu triggern, wobei eine Rechen- und/oder Auswerteeinrichtung vorgesehen ist, die derart konfiguriert ist, dass Messungen der Sende-Empfangseinheiten (1,2) kohärent prozessiert werden.

14. Verwendung des Verfahren nach einem der Ansprüche 1 bis 12 und/oder des Systems nach Anspruch 13, für eine mobile Einrichtung, vorzugsweise ein Fahrzeug, insbesondere Personen- und/oder Lastkraftwagen.

15. Mobile Einrichtung, insbesondere Fahrzeug, vorzugsweise Personen- und/oder Lastkraftwagen, umfassend ein System nach Anspruch 13.

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6982668 B1, A. Doerry, B. Mileshosky, and D. Bickel,
- DE 102014104273 A1
- WO 2017118621 A1

**In der Beschreibung aufgeführte Nicht-Patentliteratur**

- **D. KELLNER** ; **M. BARJENBRUCH** ; **K. DIETMAYER** ; **J. KLAPPSTEIN** ; **J. DICKMANN**. Instantaneous lateral velocity estimation of a vehicle using doppler radar. *Information Fusion (FUSION), 2013 16th International Conference on*, 2013, 877-884
- **H. ROHLING** ; **F. FOLSTER** ; **H. RITTER**. Lateral velocity estimation for automotive radar applications. *2007 IET Int. Conf. on Radar Systems*, 2007, 181-181
- **W. MONTLOUIS** ; **P.-R. J. CORNELY**. Direction of Arrival and Angular Velocities (DOAV) Estimation using Minimum Variance Beamforming. *Radar Conference, 2007 IEEE*, 2007, 641-646
- **A. W. DOERRY**. Patch diameter limitation due to high chirp rates in focused SAR images. *IEEE transactions on aerospace and electronic systems*, 1994, vol. 30 (4), 1125-1129
- **A. DOERRY**. *Tangential Velocity Measurement using Interferometric MTI Radar*, 2002, http://prod.sandia.gov/techlib/access-control.cgi/2002/023614.pdf
- **J. A. NANZER**. Millimeter-Wave Interferometric Angular Velocity Detection. *IEEE Transactions on Microwave Theory and Techniques*, December 2010
- **J. A. NANZER** ; **A. H. ZAI**. Correction of frequency uncertainty in wide field of view interferometric angular velocity measurements. *Microwave Symposium Digest (MTT), 2012 IEEE MTT-S International*, 2012, 1-3
- **J. A. NANZER** ; **K. KAMMERMAN** ; **K. S. ZILEVU**. A 29.5 GHz radar interferometer for measuring the angular velocity of moving objects. *Microwave Symposium Digest (IMS), 2013 IEEE MTT-S International*, 2013, 1-3
- **J. A. NANZER**. Resolution of interferometric angular velocity measurements. *Antennas and Propagation (APSURSI), 2011 IEEE International Symposium on*, 2011, 3229-3232
- **J. A. NANZER**. Micro-motion signatures in radar angular velocity measurements. *Radar Conference (RadarConf), 2016 IEEE,*, 2016, 1-4
- **T. WAGNER** ; **R. FEGER** ; **A. STELZER**. Wide-band range-Doppler processing for FMCW systems. *Radar Conference (EuRAD), 2013 European,*, 2013, 160-163